# EUROPEAN PATENT APPLICATION

(11) **EP 3 972 035 A1**
(43) Date of publication of application: **23.03.2022**
(21) Application number: 20197599.2
(22) Date of filing: 22.09.2020
(51) Int. Cl.: H01M 50/105, H01M 50/211, H01M 50/55, H01M 50/553, H01M 50/569, H01M 10/42, H01M 10/48

(54) **POUCH CELL BATTERY ASSEMBLY**

(71) Applicant: Dukosi Limited, Edinburgh, Lothian EH14 4AP (GB)
(72) Inventor: MAIR, Stuart, Edinburgh EH14 4AP (GB); CUNNINGHAM, Stuart, Edinburgh EH14 4AP (GB); CRYMBLE, Tim, Edinburgh EH14 4AP (GB); SYLVESTER, Joel, Edinburgh EH14 4AP (GB); LEWORTHY, Josh, Edinburgh EH14 4AP (GB); JONES, Adrian, Edinburgh EH14 4AP (GB)
(74) Representative: Finnegan Europe LLP

(57) **Abstract**

A pouch cell battery assembly is disclosed, comprising a pouch cell battery and an electronic device. The pouch cell battery comprises: an expandable enclosure, accommodating an anode stack, a cathode stack, and a separator disposed between the anode and cathode stacks; first and second contact terminals, the first contact terminal being electrically coupled to the anode stack and the second contact terminal being electrically coupled to the cathode stack. The electronic device may be at least partly affixed to the expandable enclosure, and electrically coupled to the first and second contact terminals. The electronic device may be configured to determine at least one physical characteristic of the pouch cell battery.

## Description

### Field of the Invention

The present invention relates to the field of batteries and energy cells. Embodiments of the invention relate to a pouch cell battery assembly comprising a pouch cell battery cell and an electronic device, wherein the electronic device is configured to determine at least one property of the pouch cell battery; and to battery packs comprising a plurality of the aforementioned pouch cell battery assemblies.

### Background

Conventional battery packs such as those used in, for example, electric vehicles and modern electronic devices, comprise a plurality of electrically coupled battery cells. The battery pack may comprise a measuring device arranged to measure a performance characteristic of the battery pack, such as the voltage or current output by the battery pack. Faulty and non-ideal operation of the battery pack may then be inferred from voltage and/or current measurements. Identification of the precise source of a fault within the battery pack, or the cause of a divergence from ideal operation, is often not possible because the monitored performance characteristics may not provide sufficient detail about the performance of individual cells within the battery pack. As a result, when faulty or non-ideal operation is detected, the entire battery pack is replaced. For similar reasons, catastrophic failure of an individual cell within the battery pack may go undetected, and can result in significant safety hazards, including fire.

Conventional battery packs often comprise a plurality of pouch cell batteries. Each pouch cell battery comprises an anode, a cathode, and an electrolyte through which ions move. In rechargeable cells, the anode serves as the negative electrode. Multiple cells may be stacked in series and/or parallel depending upon the current/voltage requirements to form a battery pack. For portable devices such as laptops or smart phones, low profile batteries are required which may use an expandable pouch, which is sealed along edge regions of the pouch rim, with contact terminals protruding out through a sealed end region, and available for connection to the device which the battery will power. The pouch cell battery may comprise at least one electrochemical arrangement. Each electrochemical arrangement may be contained within the pouch cell enclosure, and more specifically the sealed expandable enclosure. In operation, when current is drawn from the pouch battery cell, the expandable enclosure may be subject to thermal expansion.

A pouch cell battery has an internal multi-laminate construction of a plurality of planar electrodes, separated by microporous polypropylene or polyethylene separator layers, sandwiched between copper and aluminum electrode plates. Each combination represents a single electrical power cell. A pouch cell battery may comprise a plurality of electrical power cells. Each power cell end may include two internal flexible contact tongues stacked and welded together with neighboring flexible contact tongues. The anode stack is then welded to a single flat external anode contact terminal and the cathode stack is welded to a counterpart single flat external cathode contact terminal. The electrodes may be made of any one or more of: graphite, lithium titanate, silicon, lithium metal oxide, or combinations thereof.

In use, certain parameters may be monitored, including: temperature, voltage, and current, to ensure that the battery pack is operating within a safe operating range. Thermal management helps maintain a safe operating temperature.

It is desirable that battery packs have high energy density, measured both in terms of joules per kilogram (gravimetric energy density) and joules per liter (volumetric energy density). This requires that the battery comprises maximum energy storing materials, and as little extraneous material as possible, in consideration of the power delivery, thermal and safety requirements of the battery. Thus, there is a desire to limit the amount of cabling, wiring, connectors, sensors, thermal and structural support materials present in the battery pack as possible. Extraneous materials occupy volume and add weight, reducing the overall battery energy density.

It is an object of at least some embodiments of the present invention to address one or more shortcomings of the prior art battery packs, in particular, battery packs comprising pouch cell batteries.

### Summary of the Invention

In accordance with an aspect of the present disclosure, a pouch cell battery assembly is provided comprising a pouch cell battery, and an electronic device configured to determine at least one physical characteristic of the pouch cell battery. The pouch cell battery comprises an expandable enclosure accommodating an anode stack, a cathode stack, and a separator disposed between anode and cathode stacks. The pouch cell battery comprises first and second contact terminals, the first contact terminal being electrically coupled to the anode stack and the second contact terminal being electrically coupled to the cathode stack. The electronic device is at least partly affixed to the expandable enclosure, and is electrically coupled to the first and second contact terminals. The electronic device is configured to determine at least one physical characteristic of the pouch cell battery.

Electrically coupling the electronic device to the first and second contact terminals enables the electronic device to be powered by the pouch cell battery, thus obviating the need for any further power source. The electronic device may be powered even when the pouch cell battery is not supplying energy to a load. Electrically coupling the electronic device directly to the pouch cell battery enables determining a physical characteristic of the pouch cell battery. This is particularly useful for monitoring the performance and health of individual pouch cells in a battery pack. In this way, embodiments may identify degraded performance and failure of individual cells within the battery pack, enabling the individual affected cells to be serviced and/or replaced, without requiring replacement of the entire battery pack. In accordance with some embodiments, the electronic device may be directly connected to the first and second contact terminals via one or more conductors, such as wires. In some embodiments alternative coupling methods may be used, such as magnetic induction. The specific coupling method is immaterial to the present disclosure, and the person skilled in the art will appreciate that alternative coupling methods may be implemented in accordance with the herein disclosed embodiments.

In accordance with some embodiments, at least a portion of the first and second contact terminals may extend outwardly from an edge of the expandable enclosure. This may facilitate establishing an electrical connection with the contact terminals.

In accordance with some embodiments at least one physical characteristic may be determined while the electronic device is electrically coupled to the pouch cell battery. This may help to identify faulty pouch cell batteries before they are deployed, for example even during and after battery manufacture, during storage, and during battery pack assembly and/or disassembly. The electronic device may comprise a processor. The electronic device may contain memory, that can store the cell manufacturing information, aiding in pack disassembly, second life use and ultimate cell disposal/recycling.

The first and second contact terminals may be flush with or protrude from an end surface of the expandable enclosure. Although the precise shape of the contact terminals is immaterial to embodiments of the present disclosure, in some embodiments that the contact terminals may be rectangular or circular in cross-section. Depending on the intended use of the battery assembly, in some embodiments the contact terminals may be located at different end surfaces of the expandable enclosure, or may be located at the same end surface. The precise configuration of the contact terminals will be dependent on the intended use of the battery assembly, and, in particular, on any physical dimensional restrictions associated with such use. The contact terminals enable current to be drawn from the pouch cell battery.

The expandable enclosure forms a hermetic enclosure around the internal componentry of the pouch cell battery. The contact terminals may be fashioned from any suitable electrically conductive material, such as, but not limited to nickel and/or aluminum.

The pouch cell battery may have any suitable shape, which may be planar and rectangular. The enclosure may be expandable. The precise shape of the pouch cell battery and the expandable enclosure is immaterial to embodiments of the present disclosure. The described embodiments may work equally well with alternatively shaped pouch cell batteries and expandable enclosures.

The at least one physical characteristic of the cell may comprise any one or more of: temperature, current, voltage, pressure, stress, strain, impedance or electrical resistance. The electronic device may be configured to determine any one or more of these physical characteristics. Each of these physical characteristics provides useful insights to the operation of the pouch cell battery. An unexpectedly high or low voltage may be indicative of a fault in the internal componentry of the pouch cell battery. Voltage and current measurements may be used to determine the capacity of the pouch cell. A low charge capacity may be indicative that the electrolyte is nearing the end of its operational life. Thus, monitoring of physical characteristics of the pouch cell battery also enables important aspects concerning the functional health of the battery cell to be determined.

In use, the expandable enclosure expands as a result of any one or more of: thermal expansion, chemical expansion, or gas evolution or expansion. Expansion increases the pressure, stress, strain, and/or temperature of the pouch cell battery and, specifically, of the expandable enclosure. Monitoring any one or more of these physical characteristics may assist with determining whether the pouch cell battery is operating as expected. Unexpectedly high measured values of pressure, stress, or strain may be indicative of the build-up of undesired gasses within the pouch cell battery. This may provide an indication of imminent failure of the cell. Under normal operating conditions, each one of the physical characteristics may be associated with a range of expected values associated with normal operation of the pouch cell battery. Determined values of the physical characteristics that fall outside the normal range of operation, may be indicative of faulty operation of the pouch cell.

The electronic device may be electrically coupled to the first and second contact terminals by a conductor, such as but not limited to wire bonds extending between the contact terminals and the electronic device. Similarly, the electronic device may be coupled to the first and second contact terminals by soldering, welding, riveting, ultrasonic or laser welding, clamping, or any other suitable means for establishing electrical contact between the electronic device and the first and second contact terminals.

In certain embodiments, wire bonds may be embedded within the material of the expandable enclosure, or overlaid on the expandable enclosure. Where wire bonds are embedded within the material of the expandable enclosure, this may be done during manufacture of the pouch cell battery. Where wire bonds are overlaid on the expandable enclosure, this may be done as a retro-fit after cell manufacture.

Certain embodiments may comprise one or more sensors configured to measure the at least one physical characteristic of the pouch cell battery. The electronic device may be configured to determine the physical characteristics from the measurement received from the one or more sensors. In certain embodiments, the one or more sensors may be distributed around the pouch cell battery at different locations, and each sensor may be operatively coupled to the electronic device, enabling the sensor to communicate with the electronic device. Similarly, in some embodiments the electronic device itself may comprise at least one of the one or more sensors-in other words, at least one of the one or more sensors may be embedded in the electronic device. Different sensors may be configured to measure different physical characteristics. This enables the electronic device to determine different physical characteristics, which in turn enables further information regarding the state of the pouch cell to be determined.

In accordance with some embodiments, the one or more sensors may be located local to the electronic device, in which case they may relate to electronic componentry physically located within the electronic device; or they may be located remotely from the electronic device and operatively connected thereto. The sensors may comprise any one or more of a strain gauge configured to measure stress, tension, and/or pressure; a temperature sensor; a pressure sensor; a voltage sensor; an electrical current sensor; an impedance sensor; or an electrical resistance sensor.

In some embodiments the different sensors may be configured to measure the same physical characteristic at different locations, providing further insight into the state of the pouch cell. In certain instances, this may even provide information regarding the state of specific internal componentry to be determined. Monitoring a physical characteristic at different locations, enables a gradient of the physical characteristic as a function of location to be determined. For example, by monitoring temperature at different locations enables a temperature gradient across the pouch cell battery to be determined, which can provide additional information about the operative state of specific internal battery componentry to be determined. For example, whether a specific component may be malfunctioning. Similar insights may be determined by monitoring other physical characteristics at different locations on the pouch cell battery.

The physical characteristic measured by the one or more sensors need not be the same physical characteristics determined by the electronic device. For example, the one or more sensors may relate to a pressure sensor configured to measure the pressure within the expandable enclosure, in dependence of which the electronic device may determine the internal operating temperature within the expandable enclosure. Similarly, the one or more sensors may be configured to measure strain in the expandable enclosure, in dependence of which the electronic device may determine the internal temperature and/or pressure within the expandable enclosure. It is to be appreciated that these are two non-limiting examples of how a physical characteristic may be determined from sensor data, and that the data measured by the sensors need not necessarily be the same as the physical characteristic determined by the electronic device.

In some embodiments, the electronic device and/or the one or more sensors may comprise an optical sensor configured to measure a characteristic of the pouch cell battery. For example, the optical sensor may be configured to measure any one or more of temperature, gas, chemical concentration, or stress. The electro-magnetic propagation characteristics of a medium change in dependence on the above-mentioned physical characteristics of the medium. A value of the above-mentioned physical characteristics may therefore be determined by measuring propagation characteristics of an optical signal, using an optical sensor. For example, the propagation characteristics of a light signal in a medium change in dependence on the stress applied to the medium. Thus, by monitoring the characteristics of the light signal in the medium, the applied stress may be determined.

In some embodiments, the electronic device and/or the one or more sensors may comprise an ultrasonic sensor configured to measure a characteristic of the pouch cell battery. Comparable to the way in which the aforementioned optical sensors can be used to measure physical characteristics of the pouch cell battery from the propagation characteristics of an electro-magnetic signal, the ultrasonic characteristics of an ultrasonic signal propagating in the pouch cell battery can be used to measure physical characteristics of the pouch cell battery.

In some embodiments, the electronic device and/or the one or more sensors may comprise a mechanical vibration sensor. The vibration sensor may comprise a microelectromechanical system (MEMS) device. The MEMS may be configured to measure mechanical stress/strain, or pressure. Use of MEMS is particularly advantageous given their reliability, size, and speed of measurement.

The pouch cell battery assembly may comprise a wireless transmitter operatively coupled to the electronic device and configured to transmit the determined physical characteristic. For example, the determined physical characteristic may be transmitted to a battery management system (BMS) or any other remotely located device. Similarly, the wireless transmitter may be used to enable the physical characteristics associated with a first pouch cell battery to be shared with other neighboring pouch cell battery assemblies. Similarly, the wireless transmitter may enable sharing physical characteristic data with a battery system controller, which may be located remotely from the pouch cell battery assembly, although in some embodiments it may be located locally to the pouch cell battery assembly.

The pouch cell battery assembly may also comprise a receiver, enabling data transmissions received from other neighboring pouch cell apparatus. This type of information sharing between neighboring pouch cell battery assemblies may be useful when operating the pouch cell battery assemblies in a battery pack.

The wireless transmitter may comprise a near-field communication device configured for short range communication. In some embodiments, the near-field communication device may have a transmission range of up to ten centimeters. In other embodiments, the transmission range may be up to five centimeters. In yet other embodiments the transmission range may be up to two centimeters. In yet further embodiments the transmission range may be less than or equal to one centimeter. In certain embodiments the transmission range may be less than a half wavelength of the frequency used, in the medium through which the transmission is made. An example of a wireless transmitter that may be used in accordance with embodiments of the present disclosure is disclosed in the Applicant's pending patent application number US 16/313,880, the contents of which are incorporated by reference in its entirety, as if fully set forth herein.

In some embodiments, the electronic device may comprise a printed circuit board. In some embodiments the electronic device may be attached to a printed circuit board. The printed circuit board may be rigid, or flexible. In some embodiments, the wireless transmitter may be constituted by electronic components mounted on the printed circuit board. Further, electronic components may be mounted on the printed circuit board, such as one or more sensors. Such further electronic components may form at least a part of the electronic device and may include a microprocessor.

In some embodiments, the expandable enclosure may comprise a sealed edge region, and the electronic device may be at least partly affixed to the sealed edge region. Fixing the electronic device, at least partly, to the sealed edge region is advantageous because the sealed edge region is not subject to the same thermal expansion and stress as the rest of the expandable enclosure. In use, and as previously mentioned, the expandable enclosure may expand, and is designed to accommodate the stresses generated by this expansion. The stresses are minimal at the sealed edge region of the expandable enclosure, providing a mechanically more stable location to which to fix the electronic device, relative to other regions of the expandable enclosure. The sealed edge region may comprise a heat seal. Fixing the electronic device to an external surface of the expandable pouch cell, including the sealed edge region, allows for retrofitting of the electronic device to the pouch cell battery.

In some embodiments, the electronic device may be attached to the pouch cell battery at various different locations on a face of the expandable enclosure. In some embodiments, the electronic device may be located more centrally on a surface of the expandable enclosure, while in other embodiments the electronic device may be attached towards an edge region of the expandable enclosures.

In some embodiments, the electronic device may be configured to measure structural stress experienced by the pouch cell battery due to thermal expansion, or externally applied forces such as generated when the pouch cell battery assembly is dropped, or the forces generated during a rapid deceleration, such as may occur in a road traffic collision. Locating the electronic device more centrally on the surface of the expandable enclosure may be advantageous in such embodiments, where the structural stress experienced by the expandable enclosure may be greater than that experienced at the edges.

The electronic device may be affixed to an internal surface of the expandable enclosure. In such embodiments the electronic device may be provided with a protective cover or conformal coating to isolate it from the battery electrolyte. Alternatively, the electronic device may be made of a material resistant to any corrosive effects of the electrolyte. Fixing the electronic device within the pouch cell battery may be advantageous for determining certain physical characteristics of the pouch cell.

The electronic device may be affixed to the expandable enclosure via an adhesive. For example, an adhesive layer may be provided to fix the electronic device to the internal or external surface of the expandable enclosure. An adhesive strip may be provided to fix the support device to the expandable enclosure. Where an adhesive is used to affix the electronic device to an internal surface of the expandable enclosure, the adhesive is preferably selected to be resistant to any corrosive effects associated with the electrolyte.

In some embodiments, the electronic device may be attached to a support device, which is affixed to the expandable enclosure. The support device may provide additional mechanical stability to the electronic device and, therefore, provides a more mechanically stable mounting point for the electronic device. The support device may enable the pouch cell battery to be more easily retrofitted with the electronic device. In addition to providing mechanical support, the support device may also provide strain relief to the electronic device, reducing the amount of mechanical stress and/or strain experienced by the electronic device when affixed to the expandable enclosure. The support device may be attached to one or more exterior faces of the expandable enclosure. In configurations where the contact terminals are positioned parallel to one another, the support device may be arranged such that it overlaps at least a portion of the expandable enclosure's sealed end region.

In some embodiments a snap-action or press-action mechanical connection may secure the support device to the contact terminals and expandable enclosure, and may also provide an electrical connection between the electronic device and the contact terminals of the pouch cell battery.

The support device may comprise a carrier or a cradle arranged to support the electronic device. The carrier or cradle may be constructed from a plastic material. The carrier or cradle may comprise a printed circuit board or substrate that may be electrically connected to the contact terminals irrespectively of the configuration of pouch cell battery terminals. For example, regardless whether the contact terminals are configured parallel to each other, on opposite sides of the expandable enclosure, or are arranged in any other configuration, the carrier or cradle may still provide electrical coupling between the contact terminals and the electronic device.

In some embodiments, the carrier or cradle may comprise a bus bar, arranged to fit over distal ends of the contact terminals. In the ensuing description any reference to carrier is interchangeable with cradle, and all embodiments described with respect to the carrier apply equally to the cradle.

In accordance with some embodiments the carrier may be configured as a modular unit configured to be integrated into the pouch cell battery. The carrier may comprise the first and second contact terminals, and first and second contact tabs electrically coupled respectively to the first and second contact terminals. The first and second contact tabs extend from the carrier and are arranged to establish electrical contact with the anode and cathode stacks within the pouch cell battery, when the carrier is integrated into the pouch cell battery.

In some embodiments, the carrier may be configured to integrate with the pouch cell battery by fixation to an end face of the pouch cell battery. When the carrier is fixed to the end face of the pouch cell battery, the first and second contact tabs form an electrical contact with the anode and cathode stacks located within the pouch cell battery, thus, enabling current to be drawn from the first and second contact terminals. The modular carrier may be integrated with the pouch cell battery during assembly of the pouch cell battery. The modular carrier simplifies the pouch cell battery assembly process. Since contact terminals are integrated into the carrier module, this removes the need to individually configure the terminals in the pouch cell, which is laborious. Instead, the contact tabs are positioned on the carrier such that when the carrier is fixated to the pouch cell battery they form an electrical contact with the anode and cathode stacks within the pouch cell battery directly, which in turn establishes an electrical connection between the contact terminals and the cathode and anode stacks.

In some embodiments, the carrier may be complementary in shape and size to the pouch cell battery. In particular, the carrier may be complementary in shape and size to the pouch cell face it is intended to be formed integral with. For example, in certain embodiments, the carrier may be shaped and dimensioned to integrate with an edge face of the pouch cell battery. The shape of the modular carrier may be complementary to the shape of the edge face. In some embodiments, the shape of the modular carrier may be complementary to a cross-sectional shape of the pouch cell battery, the cross-section taken across the pouch cell's width, where the edge face of the pouch cell to which the carrier is intended to be integrated with is along the pouch cell's width. In some embodiments, the shape of the modular carrier may be complementary to a cross-sectional shape off the pouch cell battery, the cross-section taken across the pouch cell's length, where the edge face of the pouch cell to which the carrier is intended to be integrated with is along the pouch cell's length.

In some embodiments, the first and second contact terminals may be formed flush with a face of the carrier, whilst in other embodiments the contact terminals may extend from the face of the carrier. In certain embodiments, the contact terminals may extend from a face of the carrier, and may be configured as mechanical fixing points, enabling fixation to an external support structure.

In some embodiments, the carrier may comprise an edge face comprising an adhesive strip arranged to form a seal with the expandable enclosure of the pouch cell battery, when the carrier is integrated with the pouch cell battery. In this way, advantageously a single seal may be formed with the expandable enclosure. This contrasts with prior art solutions, in which each contact terminal forms a separate seal with the expandable enclosure, thus increasing the number of potential sources of a leak. Furthermore, because the present embodiment only requires a single seal between the carrier and the expandable pouch, disassembly of the pouch cell battery assembly is facilitated with respect to prior art solutions which use riveting and/or welding to bind the different components of the pouch cell battery together. Disassembly of a pouch cell battery comprising the integrated carrier requires breaking the seal formed between the carrier and the expandable enclosure, thereby providing access to the internal componentry within the pouch cell.

In some embodiments, the electronic device may be formed integral with the expandable enclosure. For example, the electronic device may be printed onto an internal or external surface of the expandable enclosure.

In accordance with another aspect of the disclosure, there a pouch cell battery assembly comprises a pouch cell battery, and an electronic device configured to determine at least one physical characteristic of the pouch cell battery. The pouch cell battery comprises an expandable enclosure accommodating an anode stack, a cathode stack, and a separator interposed between the anode and cathode stacks. The pouch cell battery comprises first and second contact terminals, the first contact terminal being electrically coupled to the anode stack and the second contact terminal being electrically coupled to the cathode stack. The pouch cell battery assembly may comprise a frame configured to receive the expandable enclosure. The electronic device may be at least partly affixed to the frame, and electrically coupled to the first and second contact terminals.

The frame provides an external structural support to the pouch cell battery, and specifically to the expandable enclosure. The frame improves the ease with which the pouch cell battery assembly may be handled. For example, the ease with which the assembly may be inserted within a housing is improved by use of the frame.

The present aspect may comprise components of the previously described embodiments in various combinations. Additional embodiments associated with the present aspect are outlined below.

In certain embodiments, the frame may be configured to fit around and extend over at least a portion of a sealed edge region of the expandable enclosure, enabling the main faces of the expandable enclosure to expand unimpeded due to expansion of the enclosure. The frame may be configured to grip at least a portion of the sealed edge of the expandable enclosure.

The frame may comprise a hollow cut-out region. The cut-out region may be positioned to align with the region of the expandable enclosure that is subject to the greatest expansion in use. In other words, the hollow cut-out may be aligned with the surface region of the expandable enclosure that is subject to the greatest amount of expansion. In this way, the frame avoids interfering with the normal expansion experienced by the expandable enclosure in use, whilst still imparting structural rigidity to the expandable enclosure. This may be useful when configuring the assembly within a battery pack, or when mounting the assembly on a rail.

The frame may be complementary in shape and dimensions to the pouch cell battery and may be retrofitted to the pouch cell battery. The frame may be configured to circumscribe the expandable enclosure.

In certain embodiments, the electronic device may be at least partly affixed to the frame. The frame provides a mechanically stable mounting point for the electronic device. In certain embodiments, the electronic device may be at least partly co-molded within the frame.

In certain embodiments, the electrical coupling, such as wires or other electrical conductors operatively coupling the electronic device to the contact terminals of the pouch cell battery, may be configured on the frame, or within the frame. The frame may be configured with recesses or apertures dimensioned complementary to the size and shape of the contact terminals. In use, the recesses or apertures may be arranged to receive the two contact terminals, and which recesses or apertures, as the case may be, may be provided with an electrical contact junction in which the electrical wires or other electrical conductors are placed into electrical contact with the contact terminals, thereby electrically coupling the electronic device to the contact terminals.

The frame may be dimensioned such that distal ends of the contact terminals extend beyond distal ends of the frame, thus facilitating electrically coupling the contact terminals to third party devices intended to be powered by the pouch cell battery.

The electronic device may be configured to determine the at least one physical characteristic of the pouch cell battery from a measured physical characteristic of the frame. Since the frame is in physical contact with the pouch cell battery, at least some of the frame's physical characteristics will be at least partly dependent on the pouch cell battery's physical characteristics. For example, the temperature of the frame will be proportional to the temperature of the pouch cell battery. As the temperature of the pouch cell battery increases, so too will the temperature of the frame. Thus, the internal temperature of the pouch cell battery may be determined on the basis of the temperature of the frame. The proportionality between the internal temperature of the pouch cell battery and the temperature of the frame may be calibrated during manufacturing. For a given type of pouch cell battery and frame, the proportionality between the internal temperature of the pouch cell battery and the frame may need to be determined only once, obviating the need to repeat the calibration process for each manufactured pouch cell battery. A similar type of dependency may exist for other physical characteristics.

In some embodiments, at least one of the one or more sensors may be configured on the frame, and the electronic device may be configured to determine the at least one physical characteristics from a measurement received from the sensor located on the frame. The one or more sensors may be formed integral with the frame. For example, the sensor may be formed within the frame. In some embodiments some of the plurality of sensors may be located on the frame, whilst other sensors may be located on or within the pouch cell battery, and the electronic device may be configured to determine one or more physical characteristics from measurements received from the different sensors.

In some embodiments, the frame may comprise two surfaces connected by a hinge. The frame may comprise a closed position in which the two surfaces are configured in opposing relation, and at least partly sandwich the expandable enclosure therebetween, and an open position in which at least one of the two surfaces is rotatable relative to the other about the hinge, and wherein the expandable enclosure is removable from the frame in the open position. When in the closed position, the two surfaces are in opposing relation and define a cavity or recess complementary in shape to the pouch cell battery the frame is configured to receive. In the open positions, one of the surfaces is rotatable relative to the other surface about the hinge, thereby forming a non-zero angle between the two surfaces. In the open position, the pouch cell battery located within the frame is removable.

In some embodiments the hinge may comprise a pin and socket hinge. Alternatively, in other embodiments the hinge may comprise a living hinge. In yet further embodiments the hinge may relate to any suitable hinge enabling rotation of the two frame surfaces relative to one another.

The frame may comprise a locking mechanism to bias the frame in the closed position in use. Any suitable locking mechanism may be used to keep the two surfaces of the frame in fixed relation to prevent escape of the pouch cell battery in use. For example, the locking mechanism may comprise a mechanical locking mechanism, such as a snap-fit mechanism. Similarly, a fastening mechanism may be used. For example, one surface of the frame may be provided with screws, while the other surface may be provided with complementary shaped bore holes configured to receive the screws. The frame may be locked in the closed position by engaging the screws located on one surface with the bore holes located on the opposing surface. Any locking mechanism configured to fix the two surfaces of the frame in the closed position may be used in accordance with embodiments of the present disclosure.

In some embodiments, the frame may comprise a heat sink, configured to absorb heat generated by the pouch cell battery in operation, and assist with cooling of the pouch cell battery. This may help to prevent critical overheating of the pouch cell.

In some embodiments, the frame may comprise a heat exchanger, enabling heat to be conducted to a heat sink. The heat sink may be located externally to the pouch cell battery assembly. Accordingly, the frame may be constructed of a material having good thermal conductivity, to enable the frame to draw heat from the pouch cell battery, and to feed this heat into the heat sink (thermal reservoir). In certain embodiments, the frame may comprise material having a low specific heat capacity, improving the frame's ability to extract heat from the pouch cell and conduct it to the heat sink. In some embodiments, the frame may be constructed from a metal such as aluminum. In some embodiments, the frame may be constructed from graphene, which is a good electrical insulator, but good thermal conductor.

In some embodiments, the heat sink may be located externally to the pouch cell battery assembly, in thermal contact with the frame. By thermal contact is intended an arrangement of the frame relative to the heat sink enabling heat to be exchanged between the frame and the heat sink. In some embodiments, the thermal contact may comprise a physical connection between the frame and the heat sink.

In some embodiments, the frame may comprise an embedded fluid medium, acting as a heat exchanger to draw heat from the pouch cell battery. Heat extracted from the pouch cell battery may be exchanged with the heat sink, by passing the fluid medium through the heat sink.

In some embodiments, the frame may comprise a thermally conductive sheet attached to the front or back surface of the frame and configured to function as the heat exchanger.

In accordance with some embodiments, the electronic device may be configured to determine a physical characteristic of the pouch cell battery from a measurement of the heat exchanger.

In another aspect of the present disclosure, a battery pack comprises a plurality of the above-summarized pouch cell battery assemblies. Such a battery pack shares the same advantages as described above in relation to the previously described aspects of the disclosure and associated embodiments.

In yet a further aspect of the present disclosure, a modular unit for fixation to a pouch cell battery is provided. The pouch cell battery comprises an expandable enclosure accommodating an anode stack, a cathode stack, and a separator interposed between the anode and cathode stacks. The removable modular unit comprises a first contact terminal electrically coupled to a first contact tab; a second contact terminal electrically coupled to a second contact tab; and an electronic device electrically coupled to the first and second contact terminals. When the removable modular unit is fixed to the pouch cell battery, the first contact tab forms an electrical contact with the anode stack, and the second contact tab forms an electrical contact with the cathode stack. This enables current to be drawn from the pouch cell battery via the first and second contact terminals. The electronic device is configured to determine at least one physical characteristic of the pouch cell battery.

The removable modular unit may be integrated with the pouch cell battery during assembly of the pouch cell battery. The removable modular unit simplifies the pouch cell battery assembly process. Since contact terminals are integrated into the carrier module, this removes the need to individually configure the terminals in the pouch cell, which is laborious. Instead, the contact tabs are positioned on the removable modular unit such that when the modular unit is fixated to the pouch cell battery they form an electrical contact with the anode and cathode stacks within the pouch cell battery directly, which in turn establishes an electrical connection between the contact terminals and the cathode and anode stacks.

In a similar way that use of the removable modular unit improves the ease of pouch cell battery assembly, disassembly of pouch cell battery assemblies comprising the removable modular unit, is equally improved, which in turn improves the ease with which the componentry of the pouch cell battery assembly may be recycled.

In some embodiments, the removable modular unit comprises a cradle arranged to receive the electronic device. The removable modular unit may comprise electrical conductors arranged to electrically couple the electronic device to the first and second contact terminals when the electronic device is positioned in the cradle.

In some embodiments, the removable modular unit may be complementary in shape and size to a face of the pouch cell battery to which it is adapted. For example, in some embodiments the removable modular unit may be dimensioned to integrate with an edge face of the pouch cell battery.

In some embodiments, the first and second tabs extend from a first face of the removable modular unit, and the first and second contact terminals extend from a second face of the removable modular unit. The first face being opposite to the second face of the removable modular unit.

### Brief Description of Drawings

Specific embodiments of the disclosure will be described, by way of non-limiting example only, with reference to the accompanying figures.
Figure 1a is a perspective view illustration of a pouch cell battery assembly according to an embodiment.
Figures 1b and 1c are front view illustrations of alternative embodiments, in which the electronic device is fixed respectively to a different edge of the pouch cell battery.
Figure 2a is a front view illustration of an embodiment of the disclosed pouch cell assembly in which the electronic device is affixed centrally to a main face of the expandable enclosure.
Figure 2b is a perspective cutaway view illustration of the pouch cell assembly of Figure 2a.
Figure 3A is a perspective view of a pouch cell assembly comprising a carrier, according to a further embodiment.
Figures 3B-3D are perspective views of a pouch cell assembly in which the carrier is configured as a modular unit.
Figure 4 is a perspective view of a pouch cell assembly according to a further embodiment.
Figure 5a is an exploded perspective view of an embodiment of a pouch cell battery assembly of the present disclosure comprising a frame.
Figure 5b is a perspective view of the pouch cell battery assembly of Figure 5a, in which the frame is in an open configuration.
Figure 5c is a perspective view of the pouch cell battery assembly of Figure 5a, in which the frame is in a closed configuration circumscribing the expandable enclosure.
Figure 5d is a front view of the pouch cell battery assembly of Figure 5a.
Figure 5e is an enlarged view of a portion of a hinged frame, in accordance with some embodiments.
Figures 6A and 6B are perspective views respectively of a front and back face of a pouch cell battery assembly of an embodiment of the present disclosure comprising a frame and heat exchanger.

### Detailed Description of Embodiments

In the following description of embodiments like numbered reference numerals appearing in different figures will be used to refer to shared features.

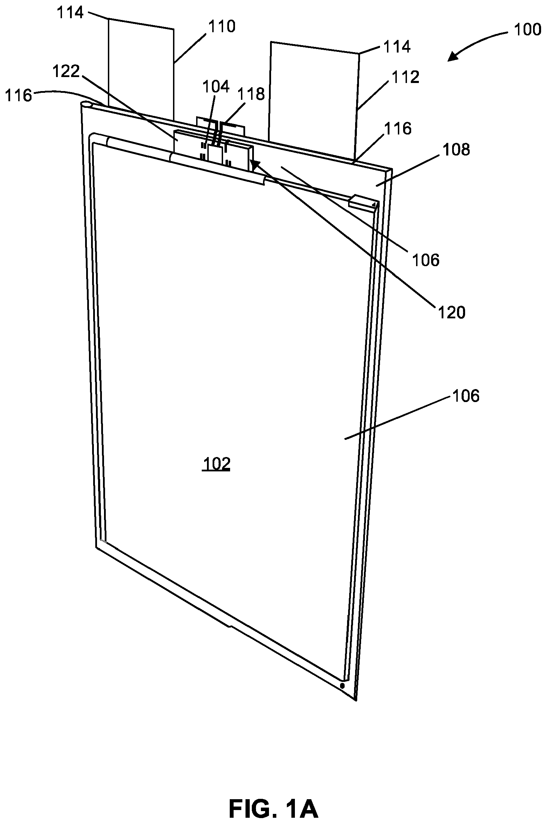

Figure 1a is perspective view of a pouch cell battery assembly 100, in accordance with an embodiment of the invention. Pouch cell battery assembly 100 comprises a pouch cell battery 102, and an electronic device 104. Pouch cell battery 102 comprises an expandable enclosure 106, having a sealed end region 108. Expandable enclosure 106 is commonly referred to as a pouch, and houses the internal battery componentry (not shown) and chemicals, such as the electrolyte, required to enable the battery cell to generate voltage and current. The internal componentry may comprise an anode stack, a cathode stack, and a separator interposed between the anode and cathode stacks. Pouch cell battery 102 comprises first 110 and second 112 contact terminals, at least a portion of which extend from the expandable enclosure 106. First 110 and second 112 contact terminals are respectively electrically coupled to the anode and cathode stacks located within the expandable enclosure 106. For example, first 110 contact terminal may be electrically coupled to the anode stack, while second 112 contact terminal may be electrically coupled to the cathode stack. In the illustrated embodiment, first 110 and second 112 contact terminals extend at least partly from expandable enclosure 106, and are positioned parallel to one another having distal end regions 114 and proximal end regions 116. The positioning of first 110 contact terminal relative to second 112 contact terminal is immaterial for present purposes and may depend on the likely use of the battery assembly 100.

Embodiments in which first 110 and second 112 contact terminals extend outwardly from different sides of expandable enclosure are also envisaged. Expandable enclosure 106 may be formed of two correspondingly dimensioned sheets of material, each defining a major face of expandable enclosure 106, bonded at their edges, thus forming the sealed end region 108, and defining an internal volume for housing the internal battery componentry and chemicals, including the electrolyte. First 110 and second 112 contact terminals may be sandwiched between the two major faces and may be configured to, at least partly, extend outwardly from expandable enclosure 106.

In some embodiments, protective film or coating may be provided to cover the contact terminals, at the very least the portion of the contact terminals located internally within expandable enclosure 106. Protective film or coating may serve to protect the portion of the contact terminals that are covered, from corrosion. For example, protective film or coating may protect against corrosion due to contact with electrolyte located within expandable enclosure, and/or from other corrosive agents, including externally located corrosive agents.

Electronic device 104 is electrically coupled to first 110 and second 112 contact terminals , enabling electronic device 104 to be electrically powered by pouch cell battery 102, and obviating the need for a separate power source. The electrical coupling may occur by any means that establishes an electrical path between contact terminals 110, 112 and electronic device 104. In accordance with some embodiments this may be provided by wired connections between electronic device 104 and first 110 and second 112 contact terminals.

Electronic device 104 may be configured to determine at least one physical characteristic of pouch cell battery 102. The at least one physical characteristic may relate to a physical characteristic of pouch cell battery 102, when pouch cell battery 102 is in operation-that is to say, when current and/or voltage is being drawn from the pouch cell battery-although this is by no means essential, and in some embodiments the physical characteristic may relate to a physical characteristic of pouch cell battery 102 when it is idle.

Electronic device 104 may be configured to disregard and/or filter out any current and/or voltage being drawn from the pouch cell battery by electronic device 104 itself. This helps to ensure that in use electronic device 104 is able to determine with greater precision the current and/or voltage being drawn from the pouch cell battery by external devices.

In some embodiments, the at least one physical characteristic may relate to any one or more of the following: temperature of pouch cell battery; current generated by pouch cell battery, including internal currents generated within pouch cell, and current being drawn from pouch cell battery; voltage generated by pouch cell battery; pressure within expandable enclosure 106; stress and/or strain experienced by the components of battery assembly 100, including the stress and/or strain experienced by expandable enclosure 106; electrical impedance associated with pouch cell battery 102; and internal electrical resistance associated with pouch cell battery 102. The at least one determined physical characteristic may subsequently be used to determine an internal state of pouch cell battery 102. In some applications, this may be used to identify faulty battery behavior, and it is envisaged that at least some embodiments may be incorporated into a battery management system (BMS).

Within the present disclosure the term "BMS" has its normal meaning in the art and, in particular, relates to any electronic system that is operatively coupled to a battery, configured to ensure that the battery operates within its safe operating area. The safe operating area is defined as the voltage and current conditions under which the battery is expected to operate without self-damage. For further details, the interested reader is directed to the following Wikipedia website: https://en.wikipedia.org/wiki/Battery management system.

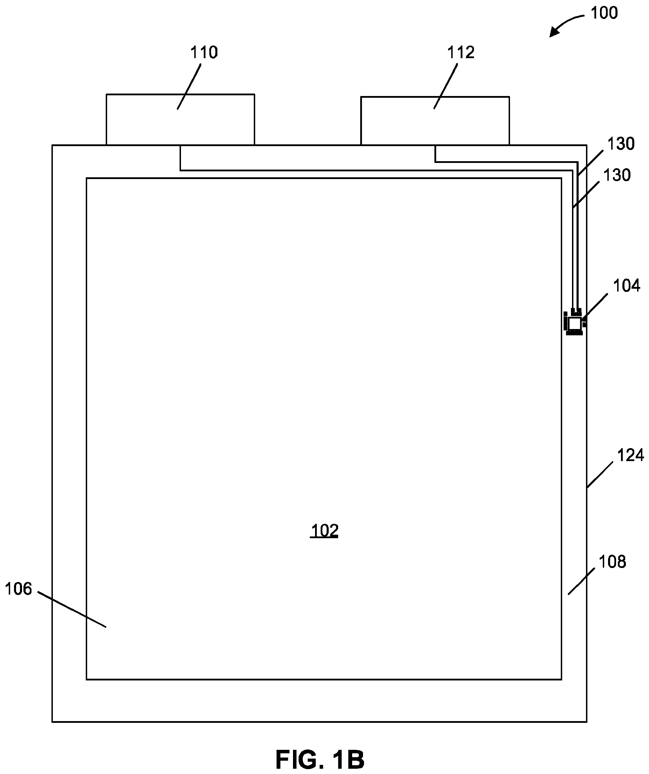

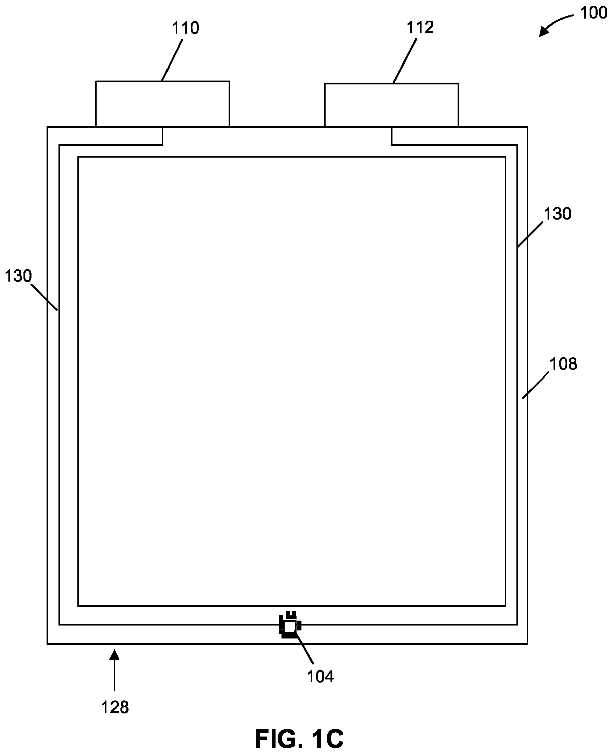

In some embodiments, battery assembly 100 may comprise transmitter 118 in operative communication with electronic device 104, and configured to transmit data processed by electronic device 104, such as the determined at least one physical characteristic of pouch cell battery 102, to a remotely located recipient. In some embodiments, the at least one physical characteristic of pouch cell battery 102 may be transmitted to a BMS. The transmitter 118 may relate to a wireless transmitter, as illustrated in Figure 1. The wireless transmitter may be configured to operate in the radio frequency spectrum. In accordance with some embodiments, the wireless transmitter may comprise a near-field communication device configured for short-range communication. The use of short-range communications is advantageous in reducing interference between different pouch cell battery assemblies located in close proximity, such as may occur when a plurality of pouch cell battery assemblies are combined into a battery pack.

In some embodiments, the transmission distance may be less than half a wavelength. The transmission frequencies may range from around 400MHz to around 5GHz. In some embodiments the transmission frequencies may relate to those used for Short Range Devices (e.g. around 434MHZ and 860MHz), and/or those used for ISM bands (e.g. 928MHz, 2.45GHz, 5.875GHz).

In certain embodiments, electronic device 104 may comprise a measurement device, enabling the electronic device 104 to determine at least one physical characteristic of pouch cell battery 102 from a measurement taken by the measurement device. The measurement device may comprise one or more sensors local to electronic device 104. In some embodiments, battery assembly 100 may comprise a plurality of sensors configured to measure physical properties of pouch cell battery 102, which sensors may be located remote from electronic device 104.

The one or more sensors may be positioned at different locations on the expandable enclosure 106 depending on the at least one physical characteristic they are configured to measure. At least some of the one or more sensors may be located internally within the expandable enclosure 106. One or more sensors may be configured in operative communication with electronic device 104, to enable electronic device 104 to determine the at least one physical characteristic from sensor data received from at least one of the one or more remotely located sensors.

Electronic device 104 may be affixed directly to expandable enclosure 106 as shown in Figures 1b and 1c, or may be affixed to carrier 120 as shown in Figure 1a, which carrier 120 is affixed to expandable enclosure 106. Carrier 120 may relate to a support structure configured to receive electronic device, and in some embodiments, may also be configured to receive transmitter 118. Carrier 120 may provide structural rigidity to electronic device 104, which may be advantageous in dependence on the structure of electronic device 104. For example, where electronic device 104 comprises a rigid printed circuit board (PCB), use of carrier 120 for fixation to the expandable enclosure may be desirable to prevent bending of electronic device 104. In those embodiments where electronic device 104 is comprised of a flexible material, then carrier 120 may be dispensed with.

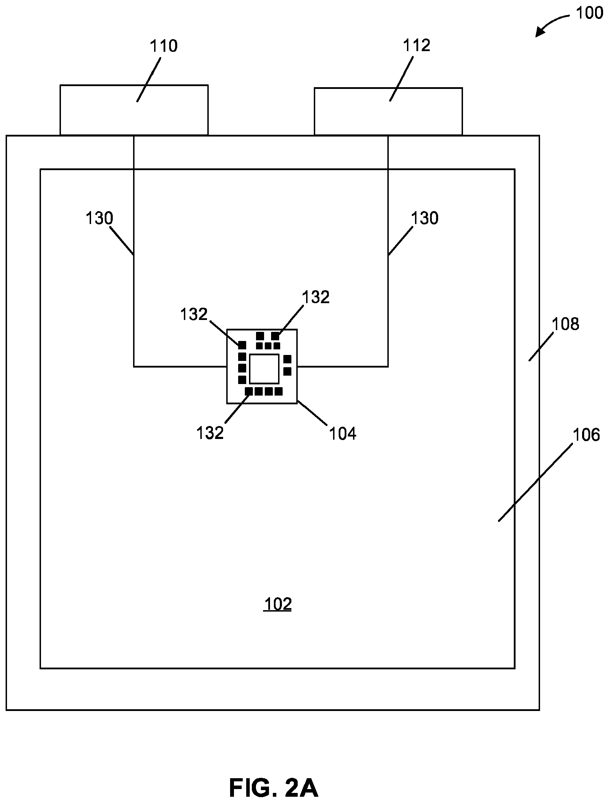

Electronic device 104 or carrier 120 may be affixed to expandable enclosure 106 via an adhesive material. adhesive material may be provided in the form of one or more elongated strips 122 disposed along expandable enclosure 106. In the embodiment of Figure 1a, adhesive strip 122 is disposed between sealed end region 108 of expandable enclosure 108 and carrier 120. In the embodiments illustrated in Figures 1c, 1d, and 2a electronic device 104 is affixed directly to the expandable enclosure, via adhesive strip disposed between the expandable enclosure and the electronic device.

Electronic device 104 may be affixed to expandable enclosure 104 at any location on or within the expandable enclosure. Some non-limiting examples of alternative placements of electronic device 104 on external surface of expandable enclosure 106, are shown in Figures 1b, 1c and 2a. In the embodiments illustrated in Figures 1a, 1b, and 1c, electronic device 103 is affixed to sealed end region 108. During use, it is common for pouch cell battery assembly 100 and, more specifically, expandable enclosure 106, to expand. It is common to account for this expansion when defining the physical footprint of pouch cell battery assembly 100, which may be defined as the physical volume occupied by pouch cell battery assembly 100, including when expandable enclosure 106 is in its thermally expanded state. Affixing electronic device 104 to sealed end region 108 reduces disruption to the pouch cell battery assembly's footprint, in particular to its thickness, which depending on the desired use may be desirable. Sealed end region 108 may completely surround expandable enclosure 106 as illustrated in Figures 1a, 1b, 1c and 2a. Alternative embodiments are also envisaged in which sealed end region 108 at least partly surrounds expandable enclosure 106.

Figures 1b and 1c illustrate embodiments in which electronic device 104 is affixed to sealed edge region 108 and located on different sides of pouch cell battery assembly 100. Figure 1b depicts electronic device 104 located on side edge 124 relative to side edge 126 from which first 112 and second 114 contact terminals extend. Similarly, Figure 1c shows electronic device 104 located on side edge 128 opposite to side 126 from which first 112 and second 114 contact terminals extend. In both illustrated examples, electrically conducting wires 130 extend from first 112 and second 114 contact terminals to electronic device 104. Wires 130 may be embedded within sealed edge region 108, or may be affixed to surface of sealed edge region 108. Configuring wires 130 to sealed edge region 108 reduces the mechanical stress and/or strain wires 130 are subjected to due to thermal expansion of pouch cell battery 102.

Figure 2a illustrates a further embodiment of pouch cell assembly 100 in which electronic device 104 is located externally on a major face of expandable enclosure 106. For example, electronic device 104 may be affixed centrally on the major face, or at any other location on the face. Electronic device 104 may be located on external surface of the pouch cell, and may be affixed using similar adhesive means as described previously.

Electronic device may comprise at least one measurement device 132 configured to measure at least one of stress, strain, or pressure that pouch cell battery 102 is experiencing due to thermal expansion. Measuring stress, strain, or pressure may provide useful information about the internal state of the battery. Some expansion of pouch cell battery 102 is expected in use. Expansion beyond expected tolerances may be indicative that undesirable internal chemical processes are occurring within the battery that may forewarn of a critical fault. Such expansion may occur as a result of internal chemical reactions resulting in the production of gasses, which is typically symptomatic of a faulty battery. Measurement of stress, strain, or pressure experienced by pouch cell battery 102, enables the early detection of such unwanted internal chemical reactions.

Similarly, at least one measurement device 132 may be configured to measure other physical characteristics of pouch cell battery 102, such as current, voltage, and internal temperature. Measurement of these physical characteristics also enables the early detection of faulty operation of pouch cell battery 102, when the determined operative value of the measured physical characteristic lies outside the expected tolerance range indicative of error-free operation.

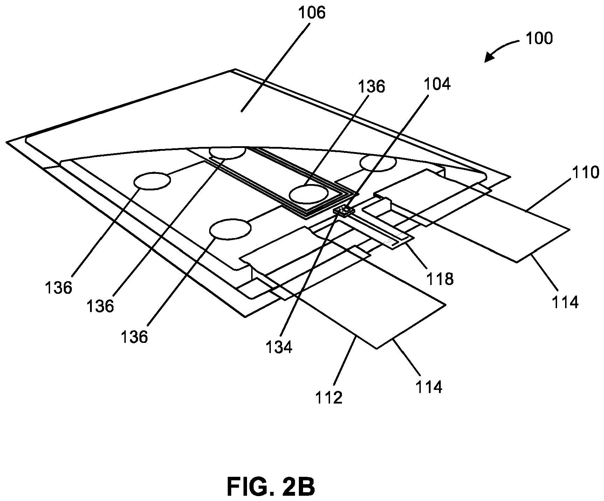

In some embodiments, and as shown in the perspective cut-away illustration of Figure 2b, electronic device 104 may be located internally within expandable enclosure 106. In some embodiments it is envisaged that electronic device 104 may be located on an internal surface of expandable enclosure 106. In common with the embodiment of Figure 2a, electronic device 104 may comprise at least one measurement device 134, albeit now located internally within expandable enclosure 106. Such a configuration may enable direct measurement of physical characteristics associated with the internal state of the pouch cell battery, such as direct measurement of physical characteristics of the electrolyte. To improve signal transmission, transmitter 118 may be located externally from expandable enclosure 106, and operatively coupled to internally located electronic device 104 by electronic componentry configured to extend from electronic device 104 within expandable enclosure to externally located transmitter 118.

In some embodiments, electronic device 104 may comprise or otherwise be operatively coupled to one or more pressure sensitive conductive material sheets 136, such as velostat^{™} or linqstat^{™}. One or more pressure sensitive conductive material sheets 136 may be affixed internally to expandable enclosure 106. In embodiments comprising a plurality of pressure sensitive conductive material sheets 136, as illustrated in Figure 2b, a plurality of pressure sensitive conductive material sheets 136 may be distributed in accordance with a predetermined pattern within expandable enclosure 106. In this way, the pressure distribution across pouch cell battery 102 may be determined.

Electronic device 104 may comprise or otherwise be operatively coupled to one or more temperature sensitive material sheets, such as a ceramic or polymer material. One or more temperature sensitive sheets may be distributed in accordance with a predetermined pattern internally within expandable enclosure 106, in a similar fashion to previously described pressure sensitive conductive sheets 136. The use of a plurality of temperature sensitive material sheets distributed within expandable enclosure 106, enables the temperature distribution across pouch cell battery 102 to be determined.

In some embodiments, one or more pressure sensitive conductive material sheets 136 and one or more temperature sensitive material sheets may be combined to form an array of temperature and pressure sensitive sensors. One non-limiting way in which this may be achieved is to apply the pressure sensitive material and the temperature sensitive material to a thin sheet of plastic, such as mylar^{®}, placed within expandable enclosure 106 to form a pressure and temperature sensor array on a single sheet of plastic.

In some embodiments, measurement device may be printed directly onto the internal surface or the external surface of expandable enclosure 106.

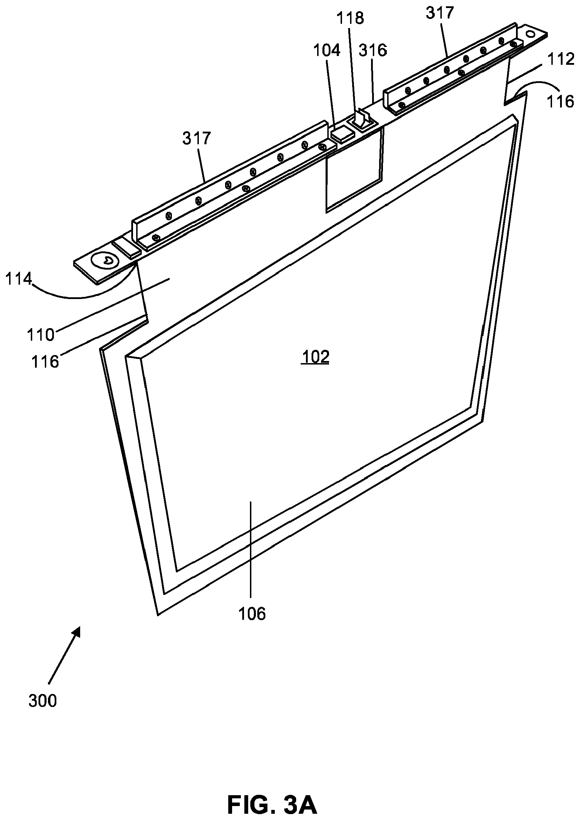

Figure 3A is a perspective illustration of a pouch cell battery assembly 300 in accordance with an embodiment. Electronic device 104 is affixed to pouch cell battery via carrier 316 comprising bus bar 317. Carrier 316 comprising bus bar 317 is fitted to distal end regions 114 of respectively first 110 and second 112 contact terminals, which extend in parallel from shared edge of the expandable enclosure 106. Carrier 316 comprising bus bar 317 may be configured with electrical conductors, such as wires, enabling first 110 and second 112 contact terminals to be electrically coupled to electronic device 104. The carrier 316 may comprise printed circuit board (PCB). Carrier 316 may comprise proximal end regions 116 of first 110 and second 112 contact terminals, in which case carrier 316 may extend between contact terminals. Use of carrier 316 comprising bus bar 317 provides a convenient retrofittable solution for affixing electronic device 104 to pouch cell battery 102. Furthermore, bus bar 317, which extends from carrier 316, provides a convenient means for electrically connecting pouch cell battery assembly 300 to other electrical devices, and imparts additional structural rigidity to pouch cell battery assembly 300, and in particular to contact terminals 110, 112.

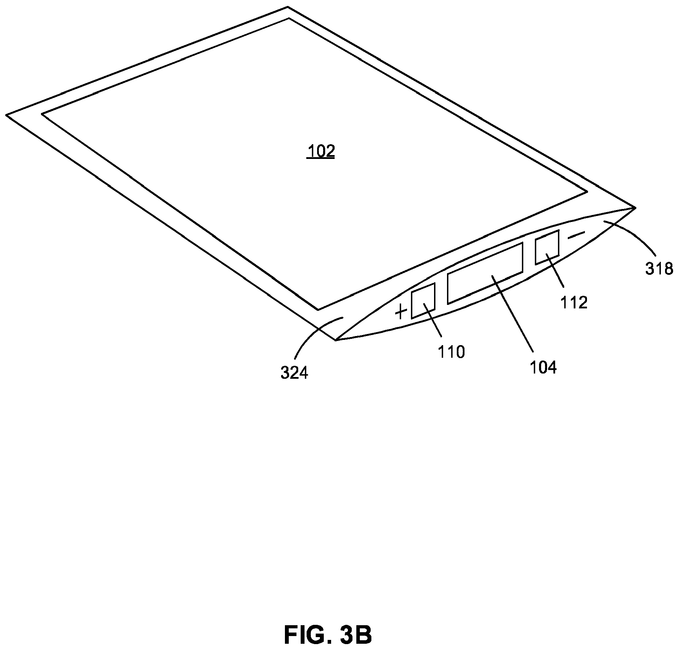

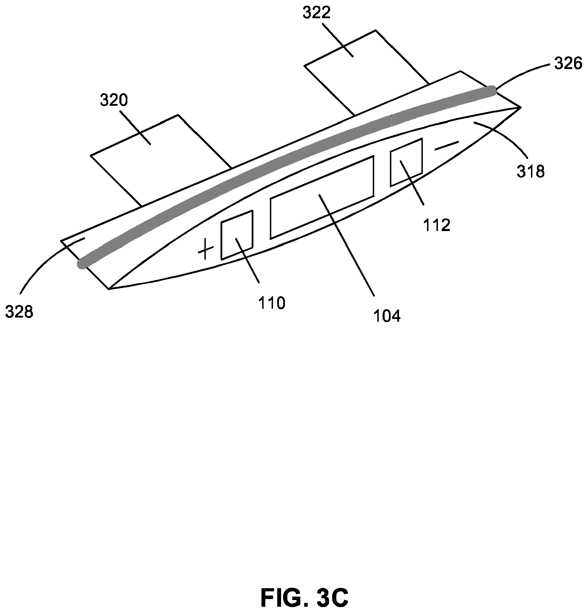

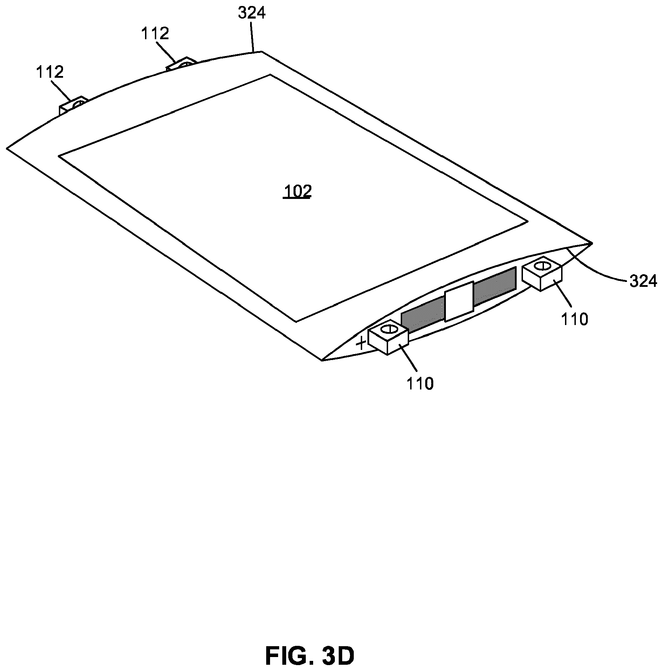

Figures 3B to 3D illustrate further embodiments in which carrier 318 is integrated into body of pouch cell battery 102. For example, and as illustrated in Figures 3B and 3D, carrier 318 may be integrated into end face 324 of pouch cell battery 102. In such embodiments, carrier 318 may have a modular design, as illustrated in Figure 3C. In particular, carrier 318 may comprise first 110 and second 112 contact terminals, and may further comprise first 320 and second 322 contact tabs. First 320 and second 322 contact tabs are configured to establish an electrical connection with the electrodes located within pouch cell battery 102. First 320 and second 322 contact tabs provide a conductive bridge between electrodes within pouch cell battery 102, and first 110 and second 112 contact terminals, enabling electrical power to be drawn from pouch cell battery 102, when carrier 318 is affixed to end face 324 of pouch cell battery 102. Accordingly, first 320 contact tab is electrically coupled to first 110 contact terminal, and second 322 contact tab is electrically coupled to second 112 contact terminal.

Carrier 318 may be complementary in shape and dimensions to pouch cell battery 102 end face 324 with which it is integrated. In the illustrated embodiment of Figures 3B-3D, carrier 318 is elliptical shaped to complement the cross-sectional shape of pouch cell taken along its width. Shaping carrier 318 to be complementary in shape and dimensions to end face 324 of pouch cell battery 102 facilitates integrating carrier 318 into pouch cell battery 102.

Carrier 318 may be integrated into pouch cell battery 102 during assembly of pouch cell battery 102. To this end, carrier 318 may be provided with adhesive sealant 326 formed along edge faces 328 of carrier 318. During assembly, as carrier 318 is inserted onto edge face 324 of pouch cell battery 102, adhesive sealant 326 bonds with at least a portion of internal faces of expandable enclosure 106 of pouch cell 102. When compared with convention pouch cell design, in which a seal is formed along each of two contact terminals, the present embodiments reduce the number of separate required seals.

During insertion of carrier 318 on to edge face 324, first 320 and second 322 tabs form a contact with the electrodes located within pouch cell battery 102, thereby providing a conductive path for current to flow to first 110 and second 112 contact terminals.

In some embodiments, carrier 318 may be formed of a rigid polymer material, such that when integrated into edge face 324 of pouch cell 102, it provides rigidity and structural support to pouch cell 102. Electronic device 104 may be affixed to carrier 318, as described in relation to preceding embodiments. Similarly, electronic device 104 may be at least partly embedded in carrier 318. Carrier may be configured with conductive connections electrically connecting electronic device 104 with first 110 and second 112 contact terminals, enabling electronic device 104 to be powered by pouch cell battery 102 in a similar manner as described in relation to preceding embodiments. The electrically conductive connections may be configured internally to carrier 318.

First 110 and second 112 contact terminals of the illustrated embodiment of Figure 3B are formed flush with respect to carrier 318. However, alternative embodiments are envisaged in which first 110 and second 112 contact terminals extend from carrier 318. For example, Figure 3D illustrates first 110 and second 112 contact terminals extending from carrier 318. In embodiment of Figure 3D first 110 and second 112 contact terminals extend from opposite end faces of pouch cell battery 102, and in which first 110 contact terminals comprises two terminals of shared polarity, e.g. positive polarity, and second 112 contact terminals comprises two terminals of shared polarity, e.g. negative polarity. First 110 and second 112 contact terminals may also be configured as mechanical fixing points, for fixing pouch cell battery in place.

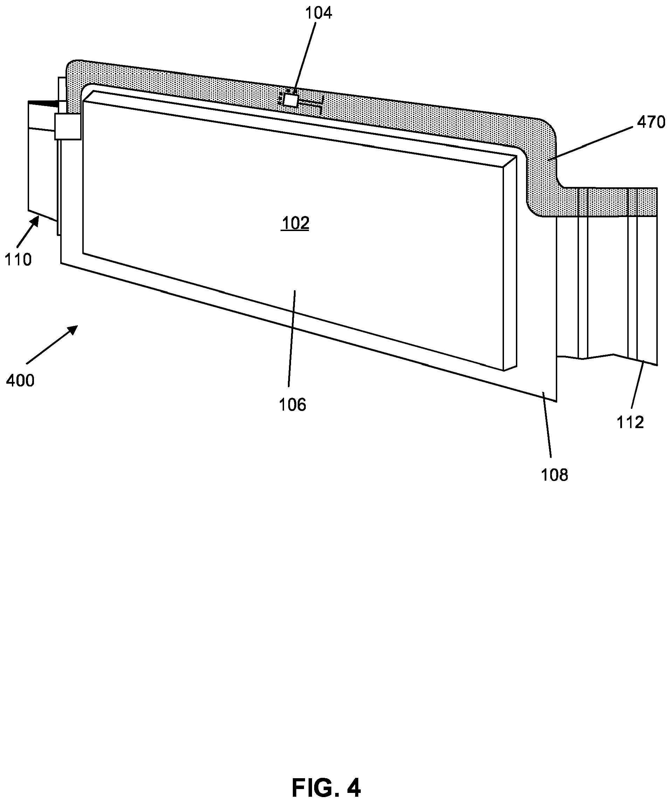

A pouch cell battery assembly 400 in which electronic device 104 is affixed to first 110 and second 112 contact terminals extending from opposite ends of pouch cell battery 102, in accordance with an embodiment, is illustrated in Figure 4. Electronic device 104 may be affixed to first 110 and second 112 contact terminals by carrier 470. Carrier 470 may be constructed from flexible material, such as flexible PCB. Carrier 470 may be configured to overlay at least a portion of expandable enclosure 106 around sealed end region 108. In a similar fashion as described in relation to previous embodiments, carrier 470 operatively couples electronic device 104 to first 110 and second 112 terminals. Carrier 470 may be formed of plastic material, and in some embodiments may comprise thermally conductive material. This may be advantageous where the electronic device is configured to determine a temperature of the pouch cell battery from a temperature measurement of the carrier.

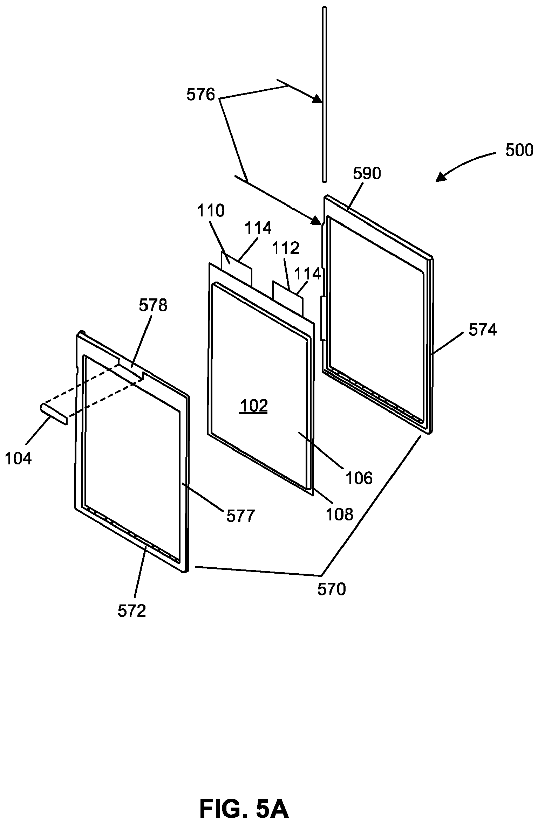

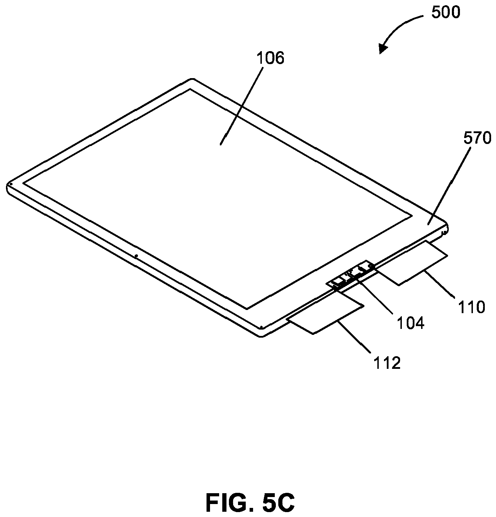

A further embodiment of a pouch cell battery assembly 500 comprising frame 570, is illustrated in Figures 5a-5d. Frame 570 imparts structural rigidity to pouch cell battery 102, which depending on the use of pouch cell battery 102, may be desirable. Figure 5a is an exploded perspective view of pouch cell battery assembly 500 comprising frame 570; Figure 5c is a perspective view of the same battery assembly 500 comprising frame 570. Frame 570 may be shaped and dimensioned to be complementary to the shape and dimensions of pouch cell battery 102. In the embodiment illustrated in Figure 5a, frame 570 is rectangular in form, and comprises a centrally located hollow cut-out arranged to enable frame 570 to accommodate expandable enclosure 106 of pouch cell battery 102 in use.

Frame 570 is dimensioned such that, in use, frame 570 extends around and grips sealed end region 108 of expandable enclosure 106. Frame 570 may comprise front 572 and back faces 574 arranged to sandwich expandable enclosure 106 therebetween. Sealed end region 108 of expandable enclosure 106 is gripped between front 572 and back face 574 of frame 570. Front 572 and back 574 faces may be connected by hinge 576 arranged on side edge of the frame 570.

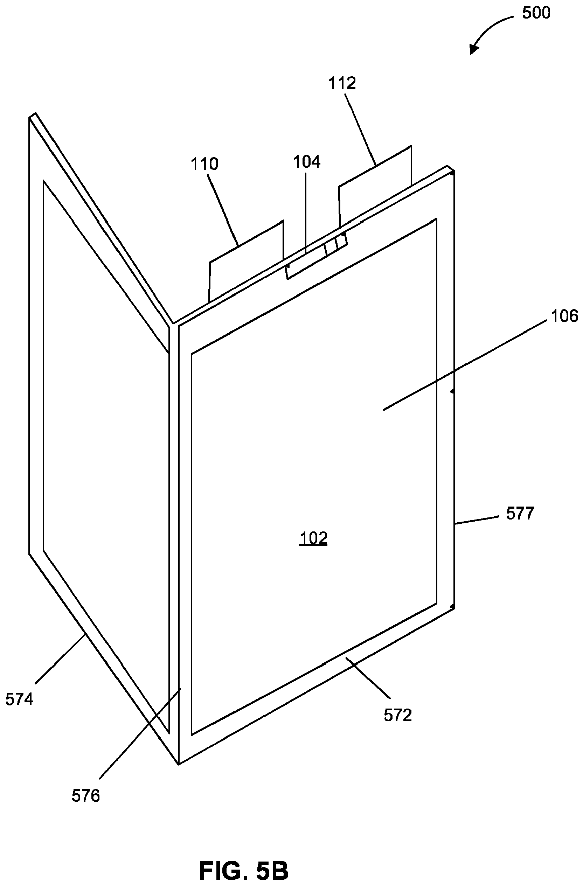

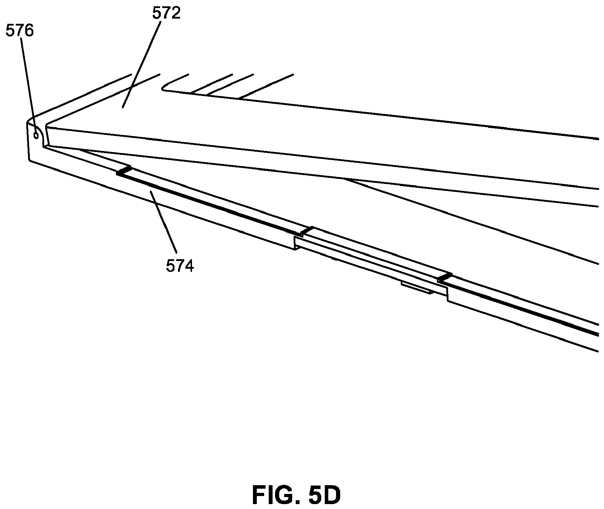

Hinge 576 defines a rotational axis enabling frame 570 to pivot from a closed position in which expandable enclosure 106 is held within frame 570, and an open position in which front 572 and back 574 faces of frame are in a non-zero angled relation about the rotational axis of hinge 576. Figure 5b is a perspective illustration of pouch cell battery assembly 500 of Figure 5a with frame 570 in an open position, in which front 572 and back 574 faces are clearly in angled relation to each other. Figure 5d is a magnified perspective illustration of a hinged corner of frame 570. In the closed position, front 572 and back 574 faces of frame 570 may be held in place relative to each other via a locking mechanism 577 configured on frame 570. In accordance with some embodiments, locking mechanism 577 may comprise interlocking mechanisms configured on respectively front 572 and back 574 faces to provide a snap-fit locking mechanism. In this way, back 574 and front 572 frame faces may be held together in the closed position.

Hinge 576 may relate to a separate component affixed to front 572 and back 574 faces of frame 570, or it may be formed integrally with front 572 and back 574 faces.

Frame 570 may be configured with recess 578 arranged to receive electronic device 104, enabling at least part of electronic device 104 is affixed to frame 570. Electronic device 104 may be configured to determine the at least one physical characteristic of pouch cell battery 102 from one or more measured physical characteristics of frame 570. For example, internal temperature of pouch cell battery 102 may be inferred from a temperature measurement of frame 570.

In some embodiments, frame 570 may comprise a flexible sheet material, such as flexible plastic material substrate made of polymer such as a polyimide, PEN, PEEK, or a polyester such as PET. Frame 570 may incorporate electronic circuitry in accordance with Flex-Circuit conventions, including electronic device 104 and/or one or more sensors operatively coupled to electronic device 104 configured to measure a property of pouch cell battery 102. In certain embodiments, flexible sheet material may be embedded within frame 570/

Frame 570 may comprise recesses to accommodate at least a portion of first 110 and second 112 contact terminals. Distal ends 114 of first 110 and second 112 contact terminals may extend beyond frame 570, to facilitate electrical connection of pouch cell battery 102 with an external device.

In some embodiments, rectangular inner perimeter of frame 570 may be provided with adhesive ribbon 590 to fix pouch cell battery 102 to frame 570. Further electronic components, such as microprocessor and/or wireless transmitter (not shown) may be mounted on or extend on or within the frame 570.

In certain embodiments, frame 570 may be configured with additional recesses for placement of any one or more of probes, sensors, valves, vents, or other circuitry to contact or pass into or out of pouch cell battery 102. Such componentry may be recessed into frame 570 or otherwise fixed to it. Electronic device 104 may be connected to first 110 and second 112 contact terminals in a similar manner as described in relation to previous embodiments.

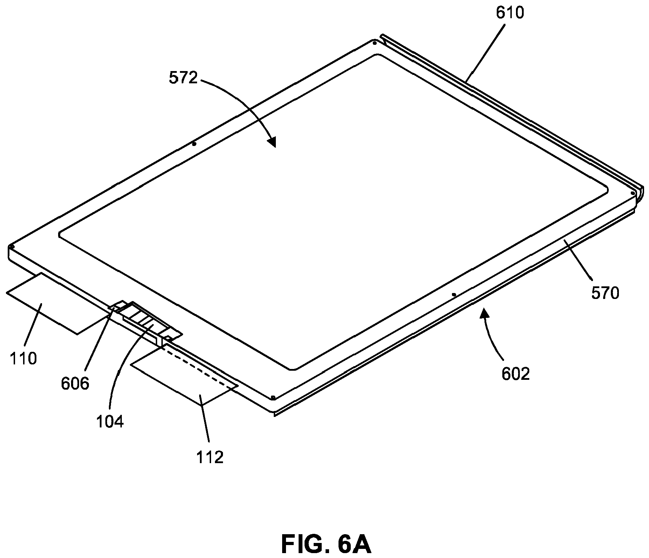

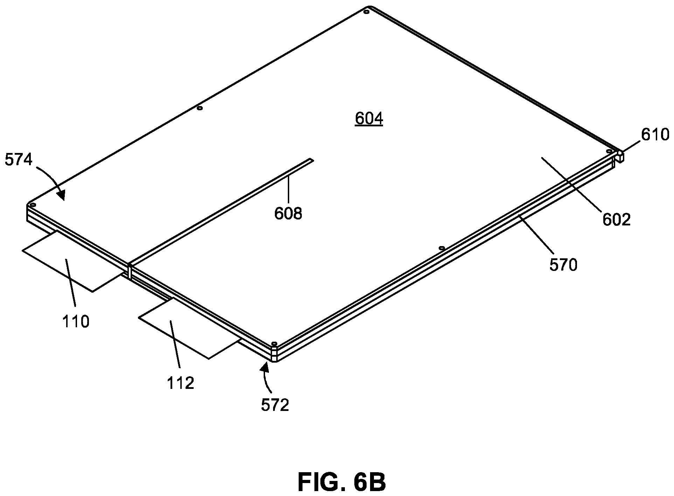

In some embodiments, and as illustrated in Figures 6A and 6B, frame 570 may have an incorporated heat exchanger 602. Figure 6A illustrates a perspective view of front face of frame 570; Figure 6B is a perspective view of back face of frame 570. For example, heat exchanger 602 may comprise thermally conductive sheet 604 attached to either front 572 or back 574 face of frame 570. In the embodiment illustrated in Figures 6A and 6B the heat exchanger 602 is attached to back face 574 of frame 570. Heat exchanger 602 may extend over hollow cut-out of frame 570. Heat exchanger 602 may be flexible to allow for expansion of pouch cell 102 in use. In the illustrated embodiment, electronic device 104 is housed in a recess located on front face 572 of frame 570, and is powered via internal couples 606. Couples 606 may be housed in frame 570, and configured to establish an electrical connection with contact terminals 110, 112 when frame 570 is in the closed position.

Temperature sensor 608, such as thermocouple, thermistor or similar device, may extend lengthwise onto at least a portion of heat exchanger 602, and may be configured to measure the temperature of heat exchanger 602. Temperature sensor 608 may be at least partly affixed to frame 570, and may extend back to electronic device, or otherwise be coupled to electronic device 104. Temperature sensor 608 is configured to capture temperature measurements associated with the temperature of heat exchanger 602, which in turn is associated with the internal operating temperature of pouch cell 102. Temperature sensor 608 may itself be flexible to mitigate for expansion of expandable enclosure 106 in use. In accordance with some embodiments, temperature data may be used to enable improved active temperature control of pouch cell battery 102 during use, during charging, or during warm up prior to start-up of the battery. In some embodiments, the temperature data may be used to improve active temperature control of individual cells.

Heat exchanger 602 may be configured to exchange heat drawn from pouch cell battery 102 with the surrounding atmosphere. In certain embodiments, heat exchanger 602 may be thermally connected to heat sink (not shown) located externally from pouch cell battery assembly 100. In such embodiments, heat exchanger 602 is configured to conduct heat drawn from pouch cell battery 102 to heat sink. Use of heat exchanger 602 improves temperature control, such as cooling, of pouch cell battery 102.

Heat exchanger 602 may comprise a lip 610 extending from bottom edge of frame 570. Lip 610 may be configured for engagement with an external cooling device, such as heat sink, to help further control the temperature of pouch cell. Thermally conductive sheet 604 may be sandwiched between first 572 and second 574 faces of frame 570 in a similar manner to pouch cell battery 102, with a portion of the thermally conductive sheet 604 extending out of the bottom edge of the frame to form lip 610. Frame 570 may comprise a channel configured in the bottom edge to enable thermally conductive sheet 604 to extend out of bottom edge. Lip 610 may be configured to engage with liquid-based heat sink, thereby enabling more heat to be drawn from pouch cell battery 102, preventing overheating of pouch cell battery 102. In some embodiments, frame 570 may comprise a liquid-based heat exchanger. For example, frame 570 may comprise a fluid channel configured to enable fluid to flow through frame 570. As the fluid flows through frame 570, it draws heat from frame 570, facilitating cooling of frame 570 and of pouch cell battery 102. In accordance with some embodiments, the fluid may be output to an externally located heat sink.

In certain embodiments, heat exchanger 602 may be thermally connected to external heat source, thereby enabling heat exchanger 602 to heat pouch cell battery 102. This may be desirable where pouch cell battery is operated in very cold environments, which may otherwise adversely impact performance of pouch cell battery 102.

The temperature of the pouch cell may be inferred from measuring the temperature of any one of frame 570, and sheet 604, by temperature sensor 608. Since pouch cell battery 102 is in physical contact with frame 570, and/or thermally conductive sheet 604, the temperature of frame and/or thermally conductive sheet 604 are correlated to that of pouch cell battery 102. The correlation may be calibrated during an initial configuration process, which may occur at the point of manufacture or assembly. Temperature sensor 608 may measure the temperature of sheet 604 and/or frame 570 itself, wherefrom the temperature of pouch cell 102 may be determined.

In some embodiments, temperature sensor 608 may extend along back face 574 of frame 570 in the shape of a rod, as illustrated in Figure 6B, and may be configured to measure a temperature gradient across at least part of its length. The measured temperature gradient may then be associated with a temperature gradient across pouch cell 102 in the direction of extension of temperature sensor 608. Monitoring the temperature gradient of pouch cell battery 102 may help to provide further insights into the internal operating state of pouch cell battery 102.

A stress or pressure gauge sensor may be configured on at least a part of frame 570 and/or sheet 604. Pressure and/or stress measurements may provide important information about the internal operating state of pouch cell battery 102. In particular, as pouch cell 102 expands in use, the internal pressure increases and this change may be monitored by an externally placed stress or pressure gauge sensor. The pressure of the pouch cell may also be determined by measuring through a strain gauge placed outside expandable enclosure. A strain gauge may be attached to the frame or may alternatively be attached to expandable enclosure itself.

Further embodiments are envisaged in which frame 570 does not comprise thermally conductive sheet 604, and in which one or more measurement sensors may be at least partly located on main face of expandable enclosure 106, and configured to operate in a similar manner as to what has previously been described.

In certain embodiments, electronic circuitry comprising electronic device 104 may be printed directly on to expandable enclosure 106.

One or more sensors disposed in the electronic device and/or connected to the electronic device may also comprise optical sensors, and/or ultrasonic sensors.

The pouch cell battery assemblies disclosed herein may be assembled into a battery pack.

The descriptions of the various embodiments of the present disclosure have been presented for purposes of illustration, and are not intended to be exhaustive or limiting. Multiple modifications and variations of the disclosed embodiments will be apparent to those of ordinary skill in the art, without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

Certain features of the present disclosure, which are, for clarity, described in the context of separate embodiments, may also be combined in a single embodiment. Conversely, various features of the invention, which are, for brevity, described in the context of a single embodiment, may also be provided separately or in any suitable sub-combination or as suitable in any other described embodiment of the disclosure. Certain features described in the context of various embodiments are not to be considered essential features of those embodiments, unless the embodiment is inoperative without those elements.

Although the disclosure has been described in conjunction with specific embodiments thereof, it is evident that many alternatives, modifications and variations will be apparent to those skilled in the art. Accordingly, it is intended to embrace all such alternatives, modifications and variations that fall within the spirit and broad scope of the appended claims.

## Claims

1. A pouch cell battery assembly, comprising:
a pouch cell battery comprising:
an expandable enclosure, accommodating an anode stack, a cathode stack, and a separator disposed between the anode and cathode stacks;
first and second contact terminals, the first contact terminal being electrically coupled to the anode stack and the second contact terminal being electrically coupled to the cathode stack; and
an electronic device at least partly affixed to the expandable enclosure, and electrically coupled to the first and second contact terminals,
the electronic device being configured to determine at least one physical characteristic of the pouch cell battery.

2. The pouch cell battery assembly of claim 1, wherein the at least one physical characteristic is any one or more of:
temperature, current, voltage, pressure, stress, strain, impedance, or electrical resistance.

3. The pouch cell battery assembly according to any preceding claim, further comprising:
one or more sensors configured to measure the at least one physical characteristic of the pouch cell battery; and wherein
the electronic device is configured to determine the at least one physical characteristic from the at least one measured physical characteristic received from at least one of the one or more sensors; and optionally
the electronic device comprises at least one of the one or more sensors.

4. The pouch cell battery assembly of any preceding claim, wherein the expandable enclosure comprises a sealed edge, and the electronic device is at least partly affixed to the sealed edge of the expandable enclosure.

5. The pouch cell battery assembly of any one of claims 1 to 3, wherein the electronic device is affixed to an internal face of the expandable enclosure.

6. The pouch cell battery assembly of any preceding claim, comprising an adhesive configured to affix the electronic device to the expandable enclosure.

7. The pouch cell battery assembly of any one of claims 1 to 4, wherein the electronic device is integral to the expandable enclosure.

8. The pouch cell battery assembly of claim 7, wherein the electronic device is printed onto a face of the expandable enclosure; and optionally
wherein the electronic device is printed onto an internal face of the expandable enclosure.

9. The pouch cell battery assembly according to any preceding claim, comprising;
a wireless transmitter operatively coupled to the electronic device, and configured to wirelessly transmit the determined physical characteristic, and optionally wherein the wireless transmitter comprises a near-field communication device configured for short range communication.

10. A pouch cell battery assembly, comprising:
a pouch cell battery comprising:
an expandable enclosure, accommodating an anode stack, a cathode stack, and a separator disposed between the anode and cathode stacks;
first and second contact terminals, the first contact terminal being electrically coupled to the anode stack and the second contact terminal being electrically coupled to the cathode stack;
a frame configured to receive the expandable enclosure; and
an electronic device at least partly affixed to the frame, and electrically coupled to the first and second contact terminals, the electronic device being configured to determine at least one physical characteristic of the pouch cell battery; and optionally
wherein the frame comprises a hollow area located on a face of the frame and arranged to enable expansion of at least a portion of the expandable enclosure into the hollow area.

11. The pouch cell battery assembly of claim 10, wherein the at least one physical characteristic is any one or more of:
temperature, current, voltage, pressure, stress, strain, impedance, or electrical resistance.

12. The pouch cell battery assembly according to any one of claims 10 to 11, comprising:
one or more sensors configured to measure the at least one physical characteristic of the pouch cell battery; and wherein
the electronic device is configured to determine the at least one physical characteristic from the at least one measured physical characteristic received from at least one of the one or more sensors; and optionally
wherein the electronic device comprises at least one of the one or more sensors.

13. The pouch cell battery assembly of claim 12, wherein at least one of the one or more sensors is located on the frame, and the electronic device is configured to determine the at least one physical characteristic of the pouch cell battery from a measured physical characteristic of the frame; and optionally
wherein the electronic device is configured to determine an internal temperature of the pouch cell battery from a measured temperature of the frame.

14. The pouch cell battery assembly of any one of claims 10 to 13, wherein the frame comprises two surfaces connected by a hinge, the frame having a closed position in which the two surfaces are configured in opposing relation, and at least partly sandwich the expandable enclosure therebetween, and an open position in which at least one of the two surfaces is rotatable relative to the other about the hinge, and wherein the expandable enclosure is removable from the frame in the open position.

15. The pouch cell battery assembly of any one of claims 10 to 14, wherein the contact terminals extend beyond a distal end of the frame.

16. The pouch cell battery assembly according to any one of claims 10 to 15, wherein the contact terminals are accommodated in recesses or apertures provided in the frame.

17. The pouch battery assembly according to any one of claims 10 to 16, comprising a thermally conductive sheet attached to a surface of the frame, and arranged to dissipate heat from the pouch cell battery or frame.

18. A battery pack comprising a plurality of pouch cell battery assemblies according to any preceding claim.

19. A modular unit for fixation to a pouch cell battery, the pouch cell battery comprising an expandable enclosure accommodating an anode stack, a cathode stack, and a separator interposed between the anode and cathode stacks, the removable modular unit comprising:
a first contact terminal electrically coupled to a first contact tab;
a second contact terminal electrically coupled to a second contact tab;
an electronic device electrically coupled to the first and second contact terminals;
when fixated to the pouch cell battery, the first contact tab forms an electrical contact with the anode stack, the second contact tab forms an electrical contact with the cathode stack, thereby enabling current to be drawn from the pouch cell battery via the first and second contact terminals; and wherein
the electronic device is configured to determine at least one physical characteristic of the pouch cell battery.
